# EUROPEAN PATENT SPECIFICATION

(11) **EP 3 922 823 B1**
(45) Date of publication and mention of the grant of the patent: **03.04.2024**
(21) Application number: 20211580.4
(22) Date of filing: 03.12.2020
(51) Int. Cl.: F01L 1/356, F01L 13/00, F01L 1/053, F01L 1/047

(54) **CONTINUOUS VARIABLE VALVE OPENING DURATION APPARATUS AND ENGINE PROVIDED WITH THE SAME**
VORRICHTUNG ZUR KONTINUIERLICHEN VERÄNDERUNG DER VENTILÖFFNUNGSDAUER UND MOTOR MIT DIESER VORRICHTUNG
DISPOSITIF DE VARIATION CONTINUE DE DURÉE D'OUVERTURE DE SOUPAPE ET MOTEUR ÉQUIPÉ DE CE DISPOSITIF

(30) Priority: 09.06.2020 KR 20200069740
(43) Date of publication of application: 15.12.2021
(73) Proprietor: HYUNDAI MOTOR COMPANY, Seoul 06797 (KR); Kia Corporation, Seocho-gu Seoul 06797 (KR)
(72) Inventor: KIM, Hyeon Woo, 18280 Hwaseong-si (KR); HA, Kyoung Pyo, 18280 Hwaseong-si (KR); KIM, Back Sik, 18280 Hwaseong-si (KR); KIM, Jong Gu, 18280 Hwaseong-si (KR)
(74) Representative: Isarpatent

(56) References cited:
- EP-A1- 3 486 441
- EP-A1- 3 767 083
- US-A1- 2017 089 230
- US-A1- 2017 284 238

## Description

### BACKGROUND OF THE INVENTION

### Field of the Invention

The present invention relates to a continuously variable valve opening duration apparatus and an engine provided with the same. More particularly, the present invention relates to a continuously variable valve opening duration apparatus an engine provided with the same which may vary the opening duration of a valve according to operation conditions of an engine with a simple construction.

### Description of Related Art

EP 3 767 083 A1 published on January 20, 2021 and claiming priority to Korean Patent Application No. 10-2019-0084890 filed on July 15, 2019 describes a continuous variable valve opening duration apparatus and an engine provided with the same. US 2017/0089230 A1 describes a continuous variable valve opening duration apparatus and an engine provided with the same. Other continuous variable valve opening duration apparatuses are known from EP 3 486 441 A1 and US 2017/284238 A1.

An internal combustion engine generates power by combusting fuel in a combustion chamber in an air media drawn into the chamber. Intake valves are operated by a camshaft to intake the air, and the air is drawn into the combustion chamber while the intake valves are open. Furthermore, exhaust valves are operated by the camshaft, and a combustion gas is exhausted from the combustion chamber while the exhaust valves are open.

Optimal operation of the intake valves and the exhaust valves depends on a rotation speed of the engine. That is, an optimal lift or optimal opening/closing timing of the valves depends on the rotation speed of the engine. To achieve such optimal valve operation depending on the rotation speed of the engine, various researches, such as designing of a plurality of cams and a continuously variable valve lift (CVVL) that can change valve lift according to engine speed, have been undertaken.

Also, to achieve such an optimal valve operation depending on the rotation speed of the engine, research has been undertaken on a continuously variable valve timing (CVVT) apparatus that enables different valve timing operations depending on the engine speed. The general CVVT may change valve timing with a fixed valve opening duration.

The information included in this Background of the present invention section is only for enhancement of understanding of the general background of the present invention and may not be taken as an acknowledgement or any form of suggestion that this information forms the prior art already known to a person skilled in the art.

### BRIEF SUMMARY

Various aspects of the present invention are direct to providing a continuously variable valve opening duration apparatus and an engine provided with the same which may vary opening duration of a valve according to operation conditions of an engine and reduce noise and vibration.

The present invention provides a continuously variable valve opening duration apparatus according to claim 1.

The continuously variable valve opening duration apparatus may further include a lower guide boss formed on the guide bracket, and a guide rod formed at the wheel housing inserted into the lower guide boss to guide the movement of the wheel housing.

The continuously variable valve opening duration apparatus may further include a lower bushing mounted on a lower portion of the lower guide boss to support the guide rod.

A center portion of the internal wheel may deviate from an imaginary line connecting the upper guide boss and the lower guide boss.

The continuously variable valve opening duration apparatus may further include an insert mounted between the wheel housing and the guide bracket.

The insert may be fixed to any one of the wheel housing and the guide bracket.

The insert may be made of plastic material.

A cross-section of the insert may be formed in a "U" shape.

A control shaft hole that supports the control shaft may be formed at the guide bracket.

The continuously variable valve opening duration apparatus may further include a control shaft bearing mounted on the control shaft hole to support rotation of the control shaft.

The continuously variable valve opening duration apparatus may further include a thrust bearing mounted on the upper guide boss to support the worm wheel.

The continuously variable valve opening duration apparatus may further include a stepped surface that prevents rotation of the wheel housing is formed at the guide bracket.

The continuously variable valve opening duration apparatus may further include a first sliding hole and a second sliding hole respectively formed at the internal wheel, a cam slot formed at the cam unit, a roller wheel connected to the camshaft and rotatably inserted into the first sliding hole, and a roller cam slidably inserted into the cam slot and rotatably inserted into the second sliding hole.

The roller cam may include a roller cam body slidably inserted into the cam slot, a cam head rotatably inserted into the second sliding hole, and a protrusion configured to inhibit the roller cam from being removed.

The roller wheel may include a wheel body slidably connected to the camshaft, and a wheel head rotatably inserted into the first sliding hole.

The continuously variable valve opening duration apparatus may further include a camshaft oil hole formed within the camshaft in a longitudinal direction thereof, a body oil hole formed at the wheel body of the roller wheel and configured to communicate with the camshaft oil hole, and an oil groove formed at the wheel head of the roller wheel and configured to communicate with the body oil hole.

The cam unit may include a first cam portion and a second cam portion which are disposed corresponding to a cylinder and an adjacent cylinder respectively, and the internal wheel may include a first internal wheel and a second internal wheel of transmitting the rotation of the camshaft to the first cam portion and the second cam portion, respectively.

The first internal wheel and the second internal wheel are rotatably connected to each other.

The continuously variable valve opening duration apparatus may further include first and second bearings internally disposed within the wheel housing and configured to support the first internal wheel and the second internal wheel respectively.

The present invention provides an engine according to claim 20.

As described above, a continuously variable valve opening duration apparatus according to various exemplary embodiments of the present invention may vary an opening duration of a valve according to operation conditions of an engine, with a simple construction.

In various exemplary embodiments of the present invention, the continuously variable valve opening duration apparatus is configured for preventing wear and reinforcing strength by applying a bushing between the wheel housing and the guide bracket.

The continuously variable valve opening duration apparatus according to various exemplary embodiments of the present invention prevents rotation of the wheel housing by applying an insert between the wheel housing and the guide bracket, and reduces noise and vibration.

The continuously variable valve opening duration apparatus according to various exemplary embodiments of the present invention may be reduced in size and thus an entire height of a valve train may be reduced.

Since the continuously variable valve opening duration apparatus may be applied to an existing engine without excessive modification, thus productivity may be enhanced and production cost may be reduced.

The continuously variable valve opening duration apparatus according to various exemplary embodiments of the present invention can reduce noise and vibration by applying a wheel elastic portion even if there is a production error in the parts.

The methods and apparatuses of the present invention have other features and advantages which will be apparent from or are set forth in more detail in the accompanying drawings, which are incorporated herein, and the following Detailed Description, which together serve to explain certain principles of the present invention.

### BRIEF DESCRIPTION OF THE DRAWINGS

FIG. 1 is a perspective view of an engine provided with a continuously variable valve opening duration apparatus according to various exemplary embodiments of the present invention.
FIG. 2 is a side view of a continuously variable valve opening duration apparatus according to various exemplary embodiments of the present invention.
FIG. 3 is an exploded perspective view of a continuously variable valve opening duration apparatus according to various exemplary embodiments of the present invention.
FIG. 4 is a partial perspective view of a continuously variable valve opening duration apparatus according to various exemplary embodiments of the present invention.
FIG. 5 is a cross-sectional view along line V - V of FIG. 1.
FIG. 6 is a perspective view of a wheel housing applied to a continuously variable valve opening duration apparatus according to various exemplary embodiments of the present invention.
FIG. 7 is a cross-sectional view along line VII-VII of FIG. 1.
FIG. 8 is a perspective view of a guide bracket applied to a continuously variable valve opening duration apparatus according to various exemplary embodiments of the present invention.
FIG. 9 is a partial projection view of a guide bracket applied to a continuously variable valve opening duration apparatus according to various exemplary embodiments of the present invention.
FIG. 10 is a perspective view showing an internal wheel and a cam unit applied to a continuously variable valve opening duration apparatus according to various exemplary embodiments of the present invention.
FIG. 11 is an exploded perspective view showing an internal wheel and a cam unit applied to a continuously variable valve opening duration apparatus according to various exemplary embodiments of the present invention.
FIG. 12 is a perspective view of an internal wheel of a continuously variable valve opening duration apparatus according to various exemplary embodiments of the present invention.
FIG. 13 is a cross-sectional view of an internal wheel of a continuously variable valve opening duration apparatus according to various exemplary embodiments of the present invention.
FIG. 14, FIG. 15 and FIG. 16 are drawings illustrating an operation of a continuously variable valve opening duration apparatus according to various exemplary embodiments of the present invention.
FIG. 17A and FIG. 17B are a drawing showing a cam slot of a continuously variable valve opening duration apparatus according to various exemplary embodiments of the present invention.
FIG. 18A, FIG. 18B and FIG. 18C are a graphs showing valve profile of a continuously variable valve opening duration apparatus according to various exemplary embodiments of the present invention.

It may be understood that the appended drawings are not necessarily to scale, presenting a somewhat simplified representation of various features illustrative of the basic principles of the present invention. The specific design features of the present invention as included herein, including, for example, specific dimensions, orientations, locations, and shapes will be determined in part by the particularly intended application and use environment.

In the figures, reference numbers refer to the same or equivalent portions of the present invention throughout the several figures of the drawing.

### DETAILED DESCRIPTION

Reference will now be made in detail to various embodiments of the present invention(s), examples of which are illustrated in the accompanying drawings and described below. While the present invention(s) will be described in conjunction with exemplary embodiments of the present invention, it will be understood that the present description is not intended to limit the present invention(s) to those exemplary embodiments. On the other hand, the present invention(s) is/are intended to cover not only the exemplary embodiments of the present invention, but also various alternatives, modifications, equivalents and other embodiments, which may be included within the scope of the present invention as defined by the appended claims.

In the following detailed description, only certain exemplary embodiments of the present invention have been shown and described, simply by way of illustration.

As those skilled in the art would realize, the described embodiments may be modified in various different ways, all without departing from the scope of the present invention

Parts marked with the same reference number throughout the specification mean the same constituent elements.

In the drawings, the thickness of layers, films, panels, regions, etc., are exaggerated for clarity.

Throughout the specification, unless explicitly described to the contrary, the word "comprise", and variations such as "comprises" or "comprising", will be understood to imply the inclusion of stated elements but not the exclusion of any other elements.

Various exemplary embodiments of the present invention will hereinafter be described in detail with reference to the accompanying drawings.

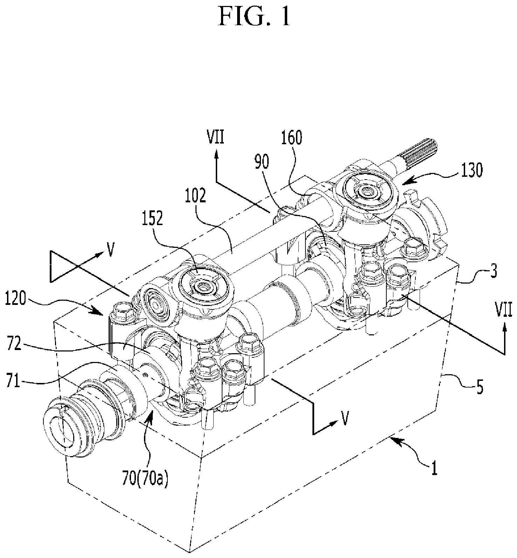

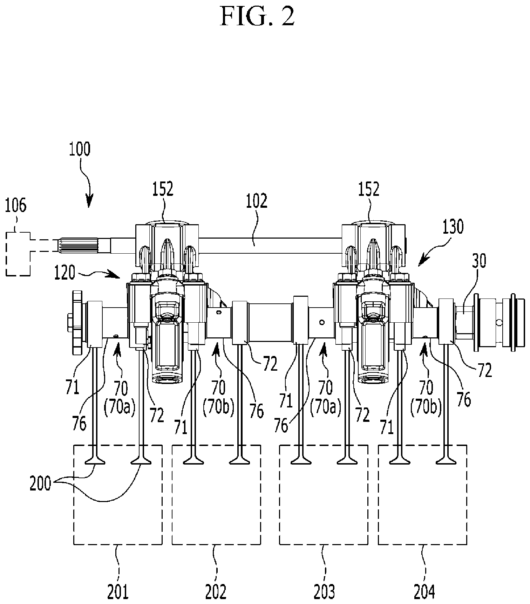

FIG. 1 is a perspective view of an engine provided with a continuously variable valve opening duration apparatus according to various exemplary embodiments of the present invention, and FIG. 2 is a side view of a continuously variable valve opening duration apparatus according to various exemplary embodiments of the present invention.

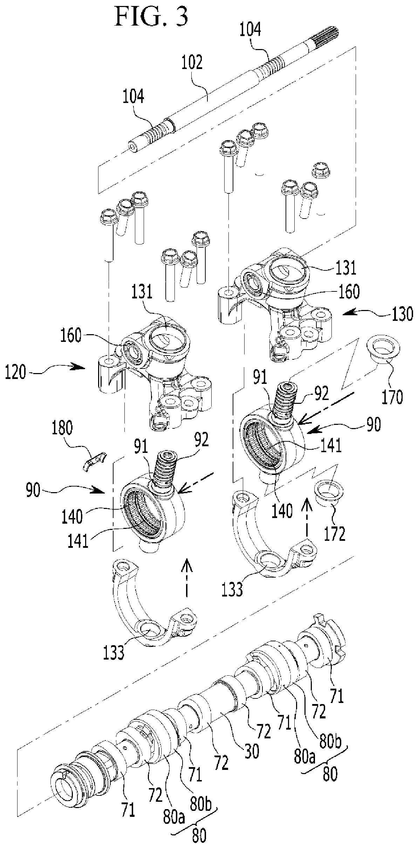

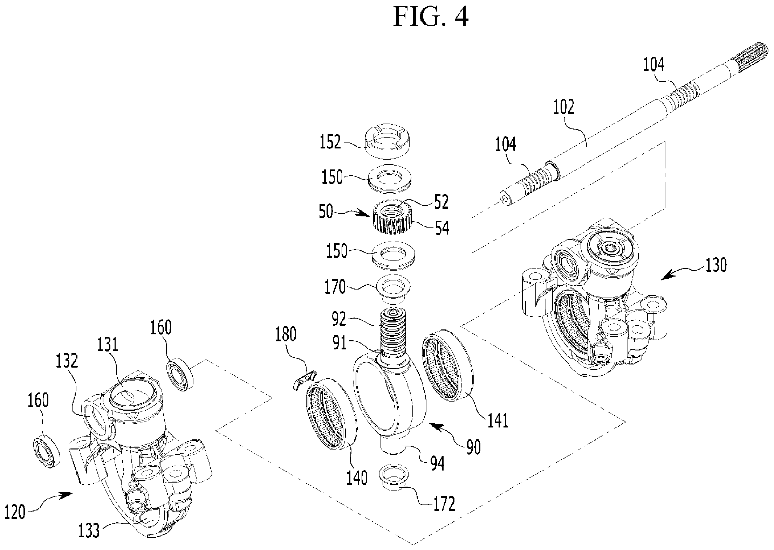

FIG. 3 is an exploded perspective view of a continuously variable valve opening duration apparatus according to various exemplary embodiments of the present invention, and FIG. 4 is a partial perspective view of a continuously variable valve opening duration apparatus according to various exemplary embodiments of the present invention.

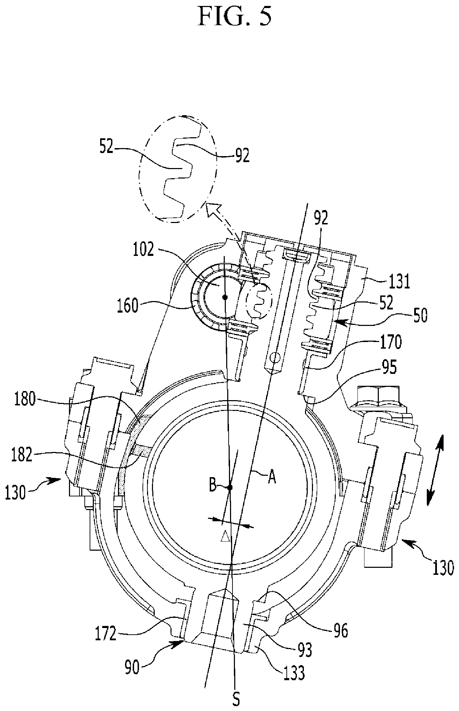

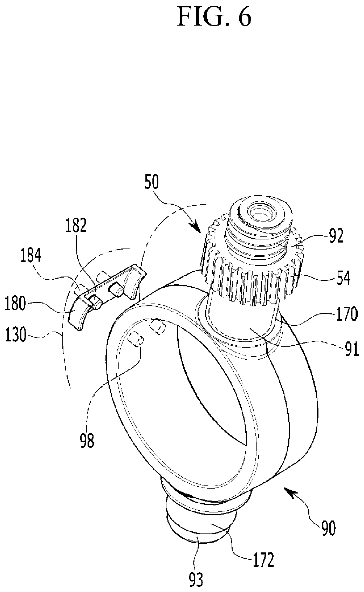

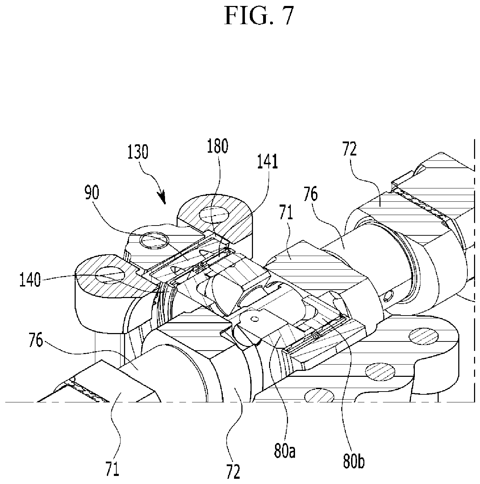

FIG. 5 is a cross-sectional view along line V - V of FIG. 1, FIG. 6 is a perspective view of a wheel housing applied to a continuously variable valve opening duration apparatus according to various exemplary embodiments of the present invention, and FIG. 7 is a cross-sectional view along line VII-VII of FIG. 1.

Referring to FIG. 1 to FIG. 7, an engine 1 according to various exemplary embodiments of the present invention includes a cylinder head 3, an engine block 5, and a continuously variable valve opening duration apparatus according to various exemplary embodiments of the present invention mounted on the cylinder head 3.

In the drawings, 4 cylinders 211, 212, 213 and 214 are formed at the engine, but it is not limited thereto.

The continuously variable valve opening duration apparatus according to various exemplary embodiments of the present invention includes a camshaft 30, a cam unit 70 on which a cam 71 is formed, and the camshaft 30 is inserted into the cam unit 70, a guide bracket 130 formed with an upper guide boss 131, an internal wheel 80 configured to transmit rotation of the camshaft 30 to the cam unit 70, a wheel housing 90 in which the internal wheel 80 is rotatably inserted, of which a guide thread 92 is formed thereto, and of which a guide shaft 91 is formed to be movably inserted into the upper guide boss 131, a worm wheel 50 to which an internal thread 52 configured to engage with the guide thread 92 is formed therewithin, and to which an external thread 54 is formed thereon, a control shaft 102 on which a control worm 104 configured to engage with the external thread 54 is formed, and an upper bushing 170 mounted on a lower portion of the upper guide boss 131 to support the guide shaft 91.

The camshaft 30 may be an intake camshaft or an exhaust camshaft.

A control shaft hole 132 supporting the control shaft 102 is formed at the guide bracket 130, and a control shaft bearing 160 is mounted on the control shaft hole 132 to support rotation of the control shaft 102.

A thrust bearing 150 is mounted on the guide boss 131 to support the worm wheel 50, and as shown in the drawing, the thrust bearing 150 may be mounted above and below the worm wheel 50, respectively.

A worm cap 152 may be coupled to the guide bracket 130 to support the thrust bearing 150. For example, the worm cap 152 may be coupled to the guide bracket 130 by caulking.

Referring to FIG. 5, the internal thread 52 and the guide thread 92 of the worm wheel 50 may be trapezoidal threads. Therefore, the rotation of the control shaft 102 is transmitted to the worm wheel 50, so that the vertical movement of the wheel housing 90 may be smoothly controlled.

The thrust bearing 150 allows the worm wheel 50 to rotate smoothly, and the worm cap 152 fixes the position of the worm wheel 50.

Therefore, the worm wheel 50 is mounted at a fixed position of the guide bracket 130, and the wheel housing 90 can move smoothly in the up and down directions of the drawing according to the rotation of the worm wheel 50.

A lower guide boss 133 is formed at the guide bracket 130, and a guide rod 94 inserted into the lower guide boss 133 is formed at the wheel housing 90 to guide the movement of the wheel housing 90. The guide rod 94 guides the movement of the wheel housing 90 and prevents the wheel housing 90 from vibration.

A lower bushing 172 supporting the guide rod 94 may be mounted on the lower portion of the lower guide boss 133.

The bushings 170 and 172 are applied between the wheel housing 90 and the guide bracket 130 to prevent shaking or vibration of the wheel housing 90 and wear as well as to reinforce strength. For example, the wheel housing 90 and the guide bracket 130 are formed of aluminum material, and the upper bushing 170 and the lower bushing 172 are formed of steel material to stably support the movement of the wheel housing 90, and the thickness of the upper guide boss 131 and the lower guide boss 133 may be reduced.

A center portion B of the internal wheel 80 may be deviated from the imaginary line A connecting the upper guide boss 131 and the lower guide boss 133.

The camshaft 30 and the control shaft 102 may be mounted on a virtual vertical line S. Therefore, it is possible to prevent tool interference when engaging the cam cap with bolts.

Here, the virtual vertical line S phase does not mean that it is on a completely vertical line, but it is a practical vertical line (substantially vertical) phase, which means a configuration configured for minimizing interference when working through a tool.

The center portion B of the internal wheel 80 is offset (Δ) with the imaginary line A connecting the upper guide boss 131 and the lower guide boss 133, so even if a slight slope is provided to the valve opening duration apparatus, the camshaft 30 and the control shaft 102 may be mounted on the virtual vertical line S.

In an exemplary embodiment of the present invention, the imaginary line A is aligned along a center axis of the upper guide boss 131 and a center axis of the lower guide boss 133.

The continuously variable valve opening duration apparatus according to various exemplary embodiments of the present invention may further include an insert 180 located between the wheel housing 90 and the guide bracket 130.

The insert 180 may be fixed to either the wheel housing 90 or the guide bracket 130.

For example, a fixing hole 98 may be formed at the wheel housing 90, an insert protrusion 182 may be formed to internal side of the insert 180, and the insert protrusion 182 may be coupled to the fixing hole 98. Conversely, a hole is formed in the guide bracket 130, and an insert protrusion 184 is formed to external side of the insert 180, so that the insert 180 may be coupled to the guide bracket 130.

Furthermore, the insert 180 may be connected to one of the wheel housing 90 and the guide bracket 130 by bolting, fitting, or may be bonded and fixed.

The insert 180 may be formed from a plastic material. When the wheel housing 90 and the guide bracket 130 made of metal materials contact each other, noise and vibration may occur. However, the insert 180 made of plastic material is located between the wheel housing 90 and the guide bracket 130 to act as a damping function to suppress noise and vibration. For example, the insert 180 may be formed from a wear-resistant engineering plastic such as PA66, but is not limited thereto.

A cross-section of the insert 180 is formed in a "U" shape. Therefore, the insert 180 surrounds the wheel housing 90 and prevents the insert 180 from being separated, and it is possible to prevent the wheel housing 90 from rotating around the upper guide boss 131 and the lower guide boss 133.

The wheel housing 90 has an upper stopper 95 and a lower stopper 96 that contact with the guide bracket 130 to limit the movement of the wheel housing 90.

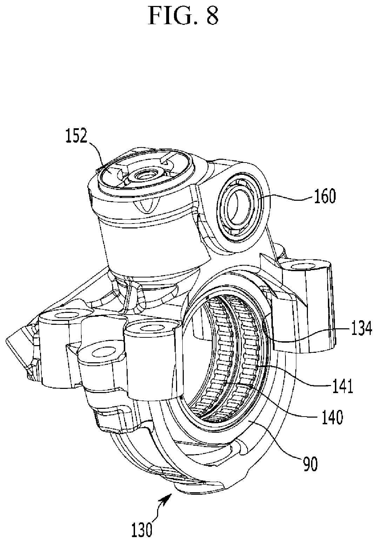

FIG. 8 is a perspective view of a guide bracket applied to a continuously variable valve opening duration apparatus according to various exemplary embodiments of the present invention.

Referring to FIG. 8, a stepped surface 134 that prevents rotation of the wheel housing 90 is formed at the guide bracket 130.

In the guide bracket 130, the upper guide boss 131 and the lower guide boss 133 are formed, so that the wheel housing 90 rotates during operation of the instrument, which may cause uneven wear.

According to various exemplary embodiments of the present invention, the stepped surface 134 is formed on the guide bracket 130, especially formed on the boss for engaging bolts on the side, reducing the number of portions and preventing rotation of the wheel housing 90.

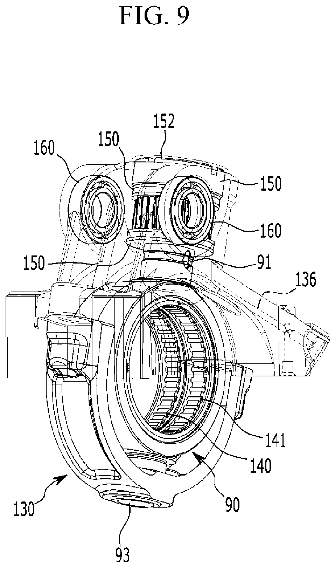

FIG. 9 is a partial projection view of a guide bracket applied to a continuously variable valve opening duration apparatus according to various exemplary embodiments of the present invention.

Referring to FIG. 9, a bracket oil hole 136 that supplies lubrication oil to the worm wheel 50 may be formed in the guide bracket 130.

In various exemplary embodiments of the present invention, the control shaft bearing 160 and the worm cap 152 form a single chamber and supply oil to the worm wheel 50 through the bracket oil hole 136. It is possible to minimize the oil pressure loss and supply oil appropriate to each portion.

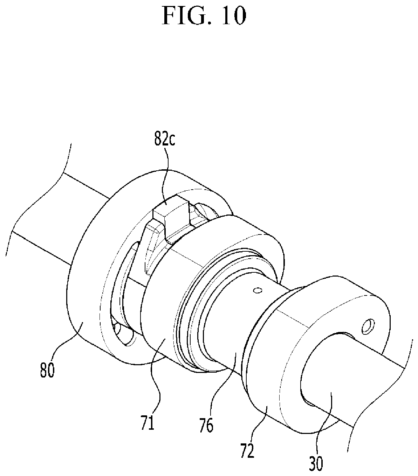

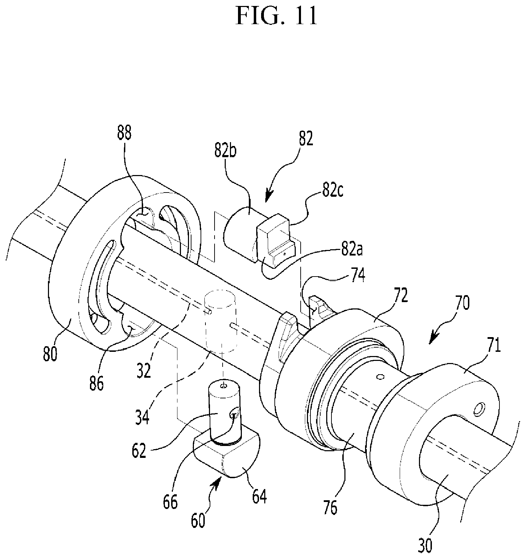

FIG. 10 is a perspective view showing an internal wheel and a cam unit applied to a continuously variable valve opening duration apparatus according to various exemplary embodiments of the present invention, and FIG. 11 is an exploded perspective view showing an internal wheel and a cam unit applied to a continuously variable valve opening duration apparatus according to various exemplary embodiments of the present invention.

Referring to FIG. 1 to FIG. 11, first and second sliding holes 86 and 88 are formed at the internal wheel 80, and cam slot 74 is formed at the cam unit 70.

The continuously variable valve opening duration apparatus further includes a roller wheel 60 connected to the camshaft 30 and rotatably inserted into the first sliding hole 86 and a roller cam 82 slidably inserted into the cam slot 74 and rotatably inserted into the second sliding hole 88.

The roller cam 82 includes a roller cam body 82a slidably inserted into the cam slot 74 and a cam head 82b rotatably inserted into the second sliding hole 88.

A protrusion 82c is formed at the roller cam 82 for preventing the roller cam 82 from being separated from the internal wheel 80 in the longitudinal direction of the camshaft 30.

The roller wheel 60 includes a wheel body 62 slidably connected to the camshaft 30 and a wheel head 64 rotatably inserted into the first sliding hole 86 and the wheel body 62 and the wheel head 64 may be integrally formed.

A camshaft hole 34 is formed at the camshaft 30, the wheel body 62 of the roller wheel 60 is movably inserted into the camshaft hole 34 and the wheel head 64 is rotatably inserted into the first sliding hole 86.

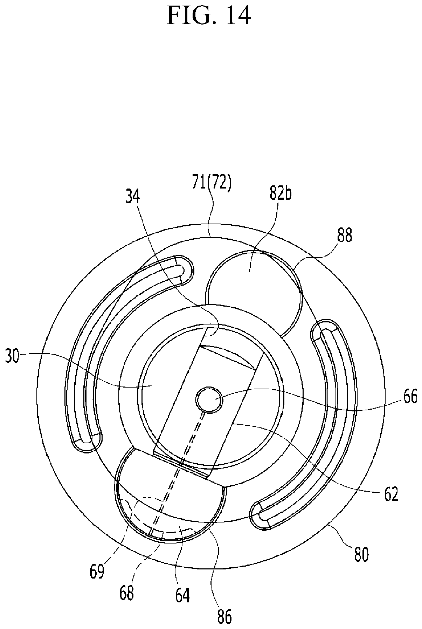

A camshaft oil hole 32 is formed within the camshaft 30 in a longitudinal direction thereof, a body oil hole 66 communicating with the camshaft oil hole 32 is formed at the wheel body 62 of the roller wheel 60 and an oil groove 68 (referring to FIG. 14) communicating with the body oil hole 66 is formed at the wheel head 64 of the roller wheel 60.

Lubricant supplied to the camshaft oil hole 32 may be supplied to the internal wheel 80 through the body oil hole 66, the communicate hole 69 and the oil groove 68.

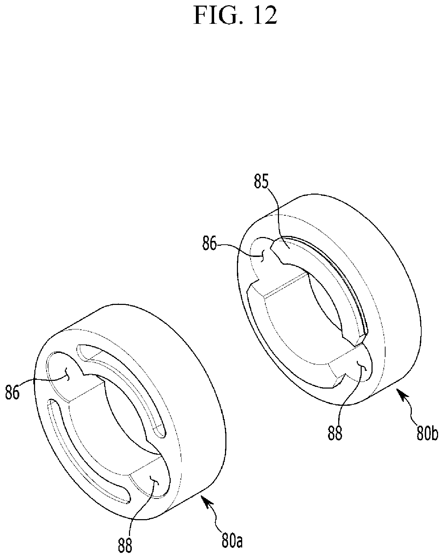

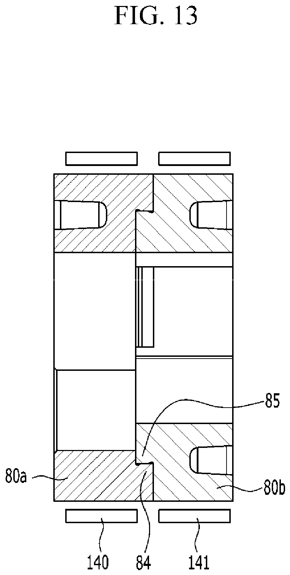

FIG. 12 is a perspective view of an internal wheel of a continuously variable valve opening duration apparatus according to various exemplary embodiments of the present invention, and FIG. 13 is a cross-sectional view of an internal wheel of a continuously variable valve opening duration apparatus according to various exemplary embodiments of the present invention.

Referring to FIG. 2, FIG. 12 and FIG. 13, the cam unit 70 includes a first cam portion 70a and a second cam portion 70b which are disposed corresponding to a cylinder and an adjacent cylinder respectively, for example the first cylinder 201 and the adjacent second cylinder 202 and the internal wheel 80 includes a first internal wheel 80a and a second internal wheel 80b transmitting rotation of the camshaft 30 to the first cam portion 70a and the second cam portion 70b respectively.

The continuously variable valve opening duration apparatus further includes first and second bearings 140, and 141a internally disposed within the wheel housing 90 for supporting the first internal wheel 80a and the second internal wheel 80b.

The first and second bearings 140 and 141a may be a needle bearing, the first and the second internal wheels 80a and 80b are internally disposed within one wheel housing 90 and the first and second bearings 140, and 141a may rotatably support the first and the second internal wheels 80a and 80b.

Since the first and the second internal wheels 80a and 80b may be internally disposed within one wheel housing 90, element numbers may be reduced, so that productivity and manufacturing economy may be enhanced.

The first internal wheel 80a and the second internal wheel 80b within the wheel housing 90 may be connected rotatable to each other. For example, a first internal wheel connecting portion 84 and a second internal wheel connecting portion 85 are formed at the first internal wheel 80a and the second internal wheel 80b respectively, and the first internal wheel connecting portion 84 and the second internal wheel connecting portion 85 are connected to each other.

In the drawing, the first internal wheel connecting portion 84 and the second internal wheel connecting portion 85 are formed as convex and concave, it is not limited thereto. The first internal wheel 80a and the second internal wheel 80b are rotatably connected to each other with variable connecting structures.

In the case that the first internal wheel 80a and the second internal wheel 80b are connected, looseness or vibration due to manufacturing tolerances of the bearing, the internal wheel, the lifter and the like may be reduced.

Two cams 71 and 72 may be formed on the first and the second cam portions 70a and 70b as a pair and a cam cap connecting portion 76 is formed between the paired cams 71 and 72 of each of the first and second cam portions 70a and 70b.

The cam 71 and 72 rotate and open the valve 200.

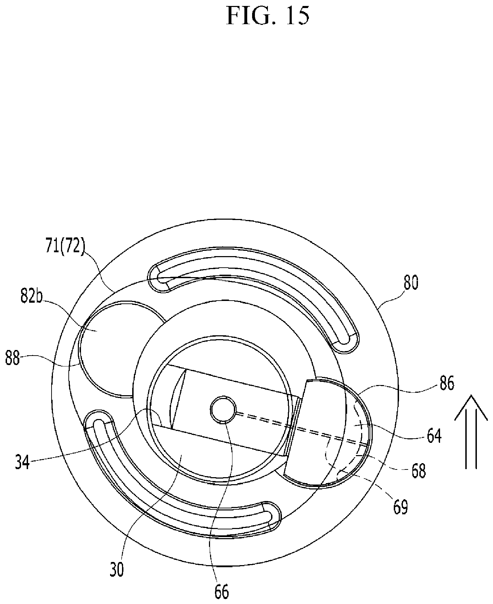

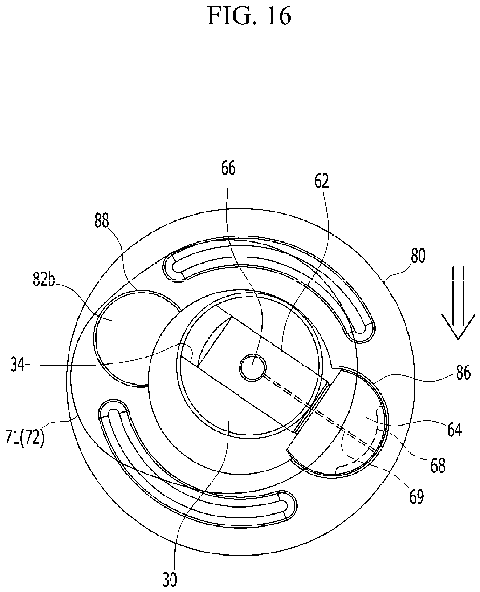

FIG. 14, FIG. 15 and FIG. 16 are drawings illustrating an operation of a continuously variable valve opening duration apparatus according to various exemplary embodiments of the present invention.

As shown in FIG. 14, when rotation centers of the camshaft 30 and the cam unit 70 are coincident, the cams 71 and 72 rotate with the same phase angle of the camshaft 30.

According to engine operation states, an ECU (engine control unit or electric control unit) transmits control signals to the control portion 100, and then the control motor 106 rotates the control shaft 102.

Referring to FIG. 5, FIG. 15 and FIG. 16, the control worm 104 engaged with the external thread 54 rotates the worm wheel 50 and since the internal thread 52 formed at the worm wheel 50 is engaged with the guide thread 92, the worm wheel 50 moves along the guide thread 92.

That is, the worm wheel 50 rotates by the rotation of the control shaft 102 and changes the relative position of the wheel housing 90 to the camshaft 30.

When the position of the wheel housing 90 moves upper or lower relative to the rotation center portion of the camshaft 30, the relative rotation speed of the cams 71 and 72 with respect to the rotation speed of the camshaft 30 are changed.

While the slider pin 60 is rotated with the camshaft 30, the pin body 62 is slidable within the camshaft hole 34, the pin head 64 is rotatable within the first sliding hole 86, and the roller cam 82 is rotatably within the second sliding hole 88 and slidable within the cam slot 74. Thus, the relative rotation speed of the cams 71 and 72 with respect to the rotation speed of the camshaft 30 is changed.

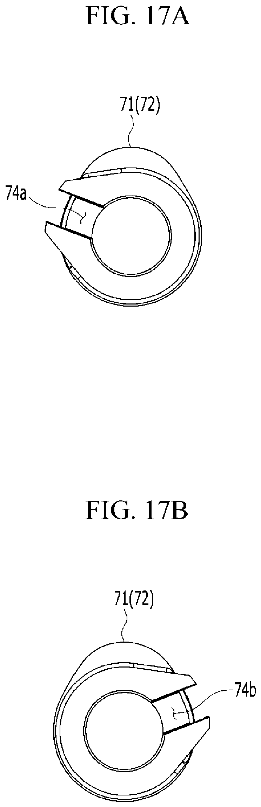

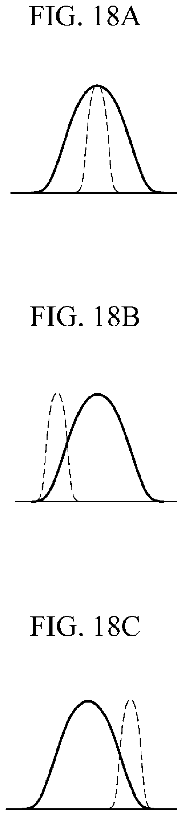

FIG. 17A and FIG. 17B are a drawing showing a cam slot of a continuously variable valve opening duration apparatus according to various exemplary embodiments of the present invention, and FIG. 18A, FIG. 18B and FIG. 18C are a graphs showing valve profile of a continuously variable valve opening duration apparatus according to various exemplary embodiments of the present invention.

As shown in FIG. 17A and FIG. 17B, the cam slot 74 may be formed more retarded than a position of the cam 71 or 72 (referring to FIG. 17A) or the cam slot 74 may be formed more advanced than a position of the cam 71 or 72 (referring to FIG. 17B), or the cam slot 74 may be formed with the same phase of the cam 71 or 72. With the above scheme, various valve profiles may be achieved.

Although maximum lift of the valve 200 is constant, however rotation speed of the cam 71 and 72 with respect to the rotation speed of the camshaft 30 is changed according to relative positions of the slider housing 90 so that closing and opening time of the valve 200 is changed. That is, duration of the valve 200 is changed.

According to the relative position of the cam slot 74, mounting angle of the valve 200 and the like, opening and closing time of the valve may be simultaneously changed as shown in FGI. 18A.

While opening time of the valve 200 is constant, closing time of the valve 200 may be retarded or advanced as shown in FIG. 18B.

While closing time of the valve 200 is constant, opening time of the valve 200 may be retarded or advanced as shown in FIG. 18C.

As described above, a continuously variable valve opening duration apparatus according to various exemplary embodiments of the present invention may achieve various valve opening duration with a simple construction.

The continuously variable valve opening duration apparatus according to various exemplary embodiments of the present invention may be reduced in size and thus an entire height of a valve train may be reduced.

Since the continuously variable valve opening duration apparatus may be applied to an existing engine without excessive modification, thus productivity may be enhanced and production cost may be reduced.

The continuously variable valve opening duration apparatus according to various exemplary embodiments of the present invention can reduce the number of portions and reduce vibration and noise by applying a worm wheel.

In various exemplary embodiments of the present invention, the continuously variable valve opening duration apparatus is configured for preventing wear and reinforcing strength by applying a bushing between the wheel housing and the guide bracket.

The continuously variable valve opening duration apparatus according to various exemplary embodiments of the present invention prevents rotation of the wheel housing by applying an insert between the wheel housing and the guide bracket, and reduces noise and vibration.

For convenience in explanation and accurate definition in the appended claims, the terms "upper", "lower", "inner", "outer", "up", "down", "upwards", "downwards", "front", "rear", "back", "inside", "outside", "inwardly", "outwardly", "interior", "exterior", "internal", "external", "inner", "outer", "forwards", and "backwards" are used to describe features of the exemplary embodiments with reference to the positions of such features as displayed in the figures. It will be further understood that the term "connect" or its derivatives refer both to direct and indirect connection.

The foregoing descriptions of specific exemplary embodiments of the present invention have been presented for purposes of illustration and description. They are not intended to be exhaustive or to limit the present invention to the precise forms disclosed, and obviously many modifications and variations are possible in light of the above teachings. The exemplary embodiments were chosen and described to explain certain principles of the present invention and their practical application, to enable others skilled in the art to make and utilize various exemplary embodiments of the present invention, as well as various alternatives and modifications thereof. It is intended that the scope of the present invention be defined by the Claims appended hereto.

## Claims

1. A valve opening duration control apparatus comprising:
a camshaft (30);
a cam unit (70) on which a cam (71, 72) is formed, wherein the camshaft (30) is inserted into the cam unit (70);
a guide bracket (130) including an upper guide boss (131);
an internal wheel (80) configured to transmit a rotation of the camshaft (30) to the cam unit (70);
a wheel housing (90) in which the internal wheel (80) is rotatably inserted, wherein a guide thread (92) is formed in a portion of the wheel housing (90), and wherein the wheel housing (90) includes a guide shaft (91) movably inserted into the upper guide boss (131);
a worm wheel (50) to which an internal thread (52) engaging with the guide thread (92) is formed in the worm wheel (50), wherein an external thread (54) is formed on the worm wheel (50);
a control shaft (102) including a control worm (104) engaged with the external thread (54); and
an upper bushing (170) mounted on a lower portion of the upper guide boss (131) to support the guide shaft (91),
such that the rotation of the control shaft (102) causes the worm wheel (50) to rotate and change the relative position of the wheel housing (90) to the camshaft (30),
such that when the position of the wheel housing (90) moves upper or lower relative to the rotation center portion of the camshaft (30), the relative rotation speed of the cams (71, 72) with respect to the rotation speed of the camshaft (30) is changed.

2. The valve opening duration control apparatus of claim 1,
wherein the guide bracket (130) further includes a lower guide boss (133), and
wherein the wheel housing (90) includes a guide rod (94) inserted into the lower guide boss (133) to guide a movement of the wheel housing (90).

3. The valve opening duration control apparatus of claim 2, further including a lower bushing (172) mounted on a lower portion of the lower guide boss (133) to support the guide rod (94).

4. The valve opening duration control apparatus of claim 2, wherein a center portion (B) of the internal wheel (80) is aligned to deviate from an imaginary line (A) connecting the upper guide boss (131) and the lower guide boss (133).

5. The valve opening duration control apparatus of claim 1, further including an insert (180) mounted between the wheel housing (90) and the guide bracket (130).

6. The valve opening duration control apparatus of claim 5, wherein the insert (180) is fixed to one of the wheel housing (90) and the guide bracket (130).

7. The valve opening duration control apparatus of claim 5, wherein the insert (180) is made of plastic material.

8. The valve opening duration control apparatus of claim 5, wherein a cross-section of the insert (180) is formed in a "U" shape.

9. The valve opening duration control apparatus of claim 1, wherein a control shaft hole (132) that supports the control shaft (102) is formed at the guide bracket (130).

10. The valve opening duration control apparatus of claim 9, further including a control shaft bearing (160) mounted on the control shaft hole (132) to support rotatably the control shaft (102).

11. The valve opening duration control apparatus of claim 1, further including a thrust bearing (150) mounted on the upper guide boss (131) to support the worm wheel (50).

12. The valve opening duration control apparatus of claim 1, further including a stepped surface (134) formed at the guide bracket (130) to prevent a rotation of the wheel housing (90).

13. The valve opening duration control apparatus of claim 1, further including:
a first sliding hole (86) and a second sliding hole (88) respectively formed at the internal wheel (80);
a cam slot (74) formed at the cam unit (70);
a roller wheel (60) connected to the camshaft (30) and rotatably inserted into the first sliding hole (86); and
a roller cam (82) slidably inserted into the cam slot (74) and rotatably inserted into the second sliding hole (88).

14. The valve opening duration control apparatus of claim 13, wherein the roller cam (82) includes:
a roller cam body (82a) slidably inserted into the cam slot (74);
a cam head (82b) rotatably inserted into the second sliding hole (88); and
a protrusion (82c) formed in a longitudinal direction of the camshaft (30) and configured to inhibit the roller cam (82) from being removed from the internal wheel (80).

15. The valve opening duration control apparatus of claim 14, wherein the roller wheel (60) includes:
a wheel body (62) slidably connected to the camshaft (30); and
a wheel head (64) rotatably inserted into the first sliding hole (86).

16. The valve opening duration control apparatus of claim 15, further including:
a camshaft oil hole (32) formed within the camshaft (30) in a longitudinal direction of the camshaft (30);
a body oil hole (66) formed at the wheel body (62) of the roller wheel (60) and fluidically-communicating with the camshaft oil hole (32); and
an oil groove (68) formed at the wheel head (64) of the roller wheel (60) and fluidically-communicating with the body oil hole (66).

17. The valve opening duration control apparatus of claim 1,
wherein the cam unit (70) includes a first cam portion (70a) and a second cam portion (70b) which are mounted corresponding to a cylinder (211, 212, 213, 214) and an adjacent cylinder (211, 212, 213, 214) respectively, and
wherein the internal wheel (80) includes a first internal wheel (80a) and a second internal wheel (80b) of transmitting the rotation of the camshaft (30) to the first cam portion (70a) and the second cam portion (70b), respectively.

18. The valve opening duration control apparatus of claim 17, wherein the first internal wheel (80a) and the second internal wheel (80b) are rotatably connected to each other.

19. The valve opening duration control apparatus of claim 17, further including first and second bearings (140, 141a) internally mounted within the wheel housing (90) and supporting the first internal wheel (80a) and the second internal wheel (80b) respectively.

20. An engine (1) mounted with the valve opening duration control apparatus of claim 1.

## Patentansprüche

1. Ventilöffnungsdauer-Steuervorrichtung, umfassend:
eine Nockenwelle (30);
eine Nockeneinheit (70), an der ein Nocken (71, 72) ausgebildet ist, wobei die Nockenwelle (30) in die Nockeneinheit (70) eingesetzt ist;
eine Führungshalterung (130), die einen oberen Führungsblock (131) aufweist;
ein inneres Rad (80), das dafür eingerichtet ist, eine Drehung der Nockenwelle (30) zu der Nockeneinheit (70) zu übertragen;
ein Radgehäuse (90), in das das innere Rad (80) drehbar eingesetzt ist, wobei ein Führungsgewinde (92) in einem Abschnitt des Radgehäuses (90) ausgebildet ist, und wobei das Radgehäuse (90) eine Führungswelle (91) aufweist, die beweglich in den oberen Führungsblock (131) eingesetzt ist;
ein Schneckenrad (50), wobei ein mit dem Führungsgewinde (92) in Eingriff stehendes Innengewinde (52) in dem Schneckenrad (50) ausgebildet ist, wobei ein Außengewinde (54) an dem Schneckenrad (50) ausgebildet ist;
eine Steuerwelle (102), die eine Steuerschnecke (104) aufweist, die mit dem Außengewinde (54) im Eingriff steht; und
eine obere Buchse (170), die an einem unteren Abschnitt des oberen Führungsblocks (131) montiert ist, um die Führungswelle (91) zu stützen,
dergestalt, dass die Drehung der Steuerwelle (102) das Schneckenrad (50) in Drehung versetzt und die relative Position des Radgehäuses (90) zur Nockenwelle (30) verändert,
dergestalt, dass, wenn sich die Position des Radgehäuses (90) relativ zu dem Drehungsmittenabschnitt der Nockenwelle (30) nach oben oder nach unten bewegt, die relative Drehgeschwindigkeit der Nocken (71, 72) in Bezug auf die Drehgeschwindigkeit der Nockenwelle (30) geändert wird.

2. Ventilöffnungsdauer-Steuervorrichtung nach Anspruch 1,
wobei die Führungshalterung (130) des Weiteren einen unteren Führungsblock (133) aufweist, und
wobei das Radgehäuse (90) eine Führungsstange (94) aufweist, die in den unteren Führungsblock (133) eingesetzt ist, um eine Bewegung des Radgehäuses (90) zu führen.

3. Ventilöffnungsdauer-Steuervorrichtung nach Anspruch 2, aufweisend des Weiteren eine untere Buchse (172), die an einem unteren Abschnitt des unteren Führungsblocks (133) montiert ist, um die Führungsstange (94) zu stützen.

4. Ventilöffnungsdauer-Steuervorrichtung nach Anspruch 2, wobei ein mittlerer Abschnitt (B) des inneren Rades (80) so ausgerichtet ist, dass er von einer gedachten Linie (A) abweicht, die den oberen Führungsblock (131) und den unteren Führungsblock (133) verbindet.

5. Ventilöffnungsdauer-Steuervorrichtung nach Anspruch 1, aufweisend des Weiteren einen Einsatz (180), der zwischen dem Radgehäuse (90) und der Führungshalterung (130) montiert ist.

6. Ventilöffnungsdauer-Steuervorrichtung nach Anspruch 5, wobei der Einsatz (180) an einem des Radgehäuses (90) und der Führungshalterung (130) befestigt ist.

7. Ventilöffnungsdauer-Steuervorrichtung nach Anspruch 5, wobei der Einsatz (180) aus Kunststoffmaterial ist.

8. Ventilöffnungsdauer-Steuervorrichtung nach Anspruch 5, wobei ein Querschnitt des Einsatzes (180) in einer U-Form ausgebildet ist.

9. Ventilöffnungsdauer-Steuervorrichtung nach Anspruch 1, wobei an der Führungshalterung (130) ein Steuerwellenloch (132) ausgebildet ist, das die Steuerwelle (102) stützt.

10. Ventilöffnungsdauer-Steuervorrichtung nach Anspruch 9, aufweisend des Weiteren ein Steuerwellenlager (160), das in dem Steuerwellenloch (132) montiert ist, um die Steuerwelle (102) drehbar zu lagern.

11. Ventilöffnungsdauer-Steuervorrichtung nach Anspruch 1, aufweisend des Weiteren ein Schublager (150), das an dem oberen Führungsblock (131) montiert ist, um das Schneckenrad (50) zu stützen.

12. Ventilöffnungsdauer-Steuervorrichtung nach Anspruch 1, aufweisend des Weiteren eine abgestufte Fläche (134), die an der Führungshalterung (130) ausgebildet ist, um eine Drehung des Radgehäuses (90) zu verhindern.

13. Ventilöffnungsdauer-Steuervorrichtung nach Anspruch 1, aufweisend des Weiteren:
ein erstes Gleitloch (86) und ein zweites Gleitloch (88), die jeweils an dem inneren Rad (80) ausgebildet sind;
einen Nockenschlitz (74), der an der Nockeneinheit (70) ausgebildet ist;
ein Rollenrad (60), das mit der Nockenwelle (30) verbunden und drehbar in das erste Gleitloch (86) eingesetzt ist; und
einen Rollennocken (82), der gleitfähig in den Nockenschlitz (74) eingesetzt ist und drehbar in das zweite Gleitloch (88) eingesetzt ist.

14. Ventilöffnungsdauer-Steuervorrichtung nach Anspruch 13, wobei der Rollennocken (82) aufweist:
einen Rollennockenkörper (82a), der gleitfähig in den Nockenschlitz (74) eingesetzt ist;
einen Nockenkopf (82b), der drehbar in das zweite Gleitloch (88) eingesetzt ist; und
einen Vorsprung (82c), der in einer Längsrichtung der Nockenwelle (30) ausgebildet ist und dafür eingerichtet ist zu verhindern, dass der Rollennocken (82) von dem inneren Rad (80) entfernt wird.

15. Ventilöffnungsdauer-Steuervorrichtung nach Anspruch 14, wobei das Rollenrad (60) aufweist:
einen Radkörper (62), der gleitfähig mit der Nockenwelle (30) verbunden ist; und
einen Radkopf (64), der drehbar in das erste Gleitloch (86) eingesetzt ist.

16. Ventilöffnungsdauer-Steuervorrichtung nach Anspruch 15, aufweisend des Weiteren:
ein Nockenwellen-Ölloch (32), die innerhalb der Nockenwelle (30) in einer Längsrichtung der Nockenwelle (30) ausgebildet ist;
ein Körper-Ölloch (66), das in dem Radkörper (62) des Rollenrades (60) ausgebildet ist und mit dem Nockenwellen-Ölloch (32) in Strömungsverbindung steht; und
eine Ölnut (68), die in dem Radkopf (64) des Rollenrades (60) ausgebildet ist und mit dem Körper-Ölloch (66) in Strömungsverbindung steht.

17. Ventilöffnungsdauer-Steuervorrichtung nach Anspruch 1,
wobei die Nockeneinheit (70) einen ersten Nockenabschnitt (70a) und einen zweiten Nockenabschnitt (70b) aufweist, die entsprechend an einem Zylinder (211, 212, 213, 214) bzw. einem benachbarten Zylinder (211, 212, 213, 214) montiert sind, und
wobei das innere Rad (80) ein erstes inneres Rad (80a) und ein zweites inneres Rad (80b) zum Übertragen der Drehung der Nockenwelle (30) zu dem ersten Nockenabschnitt (70a) bzw. dem zweiten Nockenabschnitt (70b) aufweist.

18. Ventilöffnungsdauer-Steuervorrichtung nach Anspruch 17, wobei das erste innere Rad (80a) und das zweite innere Rad (80b) drehbar miteinander verbunden sind.

19. Ventilöffnungsdauer-Steuervorrichtung nach Anspruch 17, aufweisend des Weiteren ein erstes und ein zweites Lager (140, 141a), die innerhalb des Radgehäuses (90) montiert sind und das erste innere Rad (80a) bzw. das zweite innere Rad (80b) stützen.

20. Motor (1), in dem die Ventilöffnungsdauer-Steuervorrichtung nach Anspruch 1 montiert ist.

## Revendications

1. Appareil de commande de durée d'ouverture de soupapes comprenant :
un arbre à cames (30) ;
une unité de came (70) sur laquelle une came (71, 72) est formée, dans lequel l'arbre à cames (30) est inséré dans l'unité de came (70) ;
un support de guidage (130) comportant un bossage de guidage supérieur (131) ;
une roue interne (80) configurée pour transmettre une rotation de l'arbre à cames (30) à l'unité de came (70) ;
un logement de roue (90) dans lequel la roue interne (80) est insérée de manière rotative, dans lequel un filetage de guidage (92) est formé dans une partie du logement de roue (90), et dans lequel le logement de roue (90) comprend un arbre de guidage (91) inséré de manière mobile dans le bossage de guidage supérieur (131) ;
une roue à vis sans fin (50) avec un filetage interne (52), en prise avec le filetage de guidage (92), formé dans la roue à vis sans fin (50) et avec un filetage externe (54) formé sur la roue à vis sans fin (50) ;
un arbre de commande (102) comportant une vis sans fin de commande (104) en prise avec le filetage externe (54) ; et une douille supérieure (170) montée sur une partie inférieure du bossage de guidage supérieur (131) pour supporter l'arbre de guidage (91),
de sorte que la rotation de l'arbre de commande (102) entraîne la rotation de la roue à vis sans fin (50) et modifie la position relative du logement de roue (90) par rapport à l'arbre à cames (30),
de sorte que, lorsque la position du logement de roue (90) se déplace vers le haut ou vers le bas par rapport à la partie centrale de rotation de l'arbre à cames (30), la vitesse de rotation relative des cames (71, 72) par rapport à la vitesse de rotation de l'arbre à cames (30) est modifiée.

2. Appareil de commande de durée d'ouverture de soupapes selon la revendication 1,
dans lequel le support de guidage (130) comporte en outre un bossage de guidage inférieur (133), et
dans lequel le logement de roue (90) comporte une tige de guidage (94) insérée dans le bossage de guidage inférieur (133) pour guider un mouvement du logement de roue (90).

3. Appareil de commande de durée d'ouverture de soupapes selon la revendication 2, comportant en outre une douille inférieure (172) montée sur une partie inférieure du bossage de guidage inférieur (133) pour supporter la tige de guidage (94).

4. Appareil de commande de durée d'ouverture de soupapes selon la revendication 2, dans lequel une partie centrale (B) de la roue interne (80) est alignée de manière à s'écarter d'une ligne imaginaire (A) reliant le bossage de guidage supérieur (131) et le bossage de guidage inférieur (133).

5. Appareil de commande de durée d'ouverture de soupapes selon la revendication 1, comportant en outre un insert (180) monté entre le logement de roue (90) et le support de guidage (130).

6. Appareil de commande de durée d'ouverture de soupapes selon la revendication 5, dans lequel l'insert (180) est fixé à l'un du logement de roue (90) et du support de guidage (130) .

7. Appareil de commande de durée d'ouverture de soupapes selon la revendication 5, dans lequel l'insert (180) est en matière plastique.

8. Appareil de commande de durée d'ouverture de soupapes selon la revendication 5, dans lequel une section transversale de l'insert (180) est en forme de « U ».

9. Appareil de commande de durée d'ouverture de soupapes selon la revendication 1, dans lequel un trou d'arbre de commande (132) qui supporte l'arbre de commande (102) est formé sur le support de guidage (130).

10. Appareil de commande de durée d'ouverture de soupapes selon la revendication 9, comportant en outre un palier d'arbre de commande (160) monté sur le trou d'arbre de commande (132) pour supporter de manière rotative l'arbre de commande (102).

11. Appareil de commande de durée d'ouverture de soupapes selon la revendication 1, comportant en outre un palier de butée (150) monté sur le bossage de guidage supérieur (131) pour supporter la roue à vis sans fin (50).

12. Appareil de commande de durée d'ouverture de soupapes selon la revendication 1, comportant en outre une surface étagée (134) formée au niveau du support de guidage (130) pour empêcher une rotation du logement de roue (90).

13. Appareil de commande de durée d'ouverture de soupapes selon la revendication 1, comportant en outre :
un premier trou de coulissement (86) et un deuxième trou de coulissement (88) respectivement formés sur la roue interne (80) ;
une fente de came (74) formée sur l'unité de came (70) ;
une roue à rouleau (60) reliée à l'arbre à cames (30) et insérée de manière rotative dans le premier trou de coulissement (86) ; et
une came à rouleau (82) insérée de manière coulissante dans la fente de came (74) et insérée de manière rotative dans le deuxième trou de coulissement (88).

14. Appareil de commande de durée d'ouverture de soupapes selon la revendication 13, dans lequel la came à rouleau (82) comporte :
un corps de came à rouleau (82a) inséré de manière coulissante dans la fente de came (74) ;
une tête de came (82b) insérée de manière rotative dans le deuxième trou de coulissement (88) ; et
une protubérance (82c) formée dans une direction longitudinale de l'arbre à cames (30) et configurée pour empêcher la came à rouleau (82) d'être retirée de la roue interne (80).

15. Appareil de commande de durée d'ouverture de soupapes selon la revendication 14, dans lequel la roue à rouleau (60) comporte :
un corps de roue (62) relié de manière coulissante à l'arbre à cames (30) ; et
une tête de roue (64) insérée de manière rotative dans le premier trou de coulissement (86).

16. Appareil de commande de durée d'ouverture de soupapes selon la revendication 15, comportant en outre :
un trou d'huile d'arbre à cames (32) formé à l'intérieur de l'arbre à cames (30) dans une direction longitudinale de l'arbre à cames (30) ;
un trou d'huile de corps (66) formé dans le corps de roue (62) de la roue à rouleau (60) et communiquant fluidiquement avec le trou d'huile d'arbre à cames (32) ; et
une rainure d'huile (68) formée sur la tête de roue (64) de la roue à rouleau (60) et communiquant fluidiquement avec le trou d'huile de corps (66).

17. Appareil de commande de durée d'ouverture de soupapes selon la revendication 1,
dans lequel l'unité de came (70) comporte une première partie de came (70a) et une deuxième partie de came (70b) qui sont montées de manière à correspondre respectivement à un cylindre (211, 212, 213, 214) et à un cylindre adjacent (211, 212, 213, 214), et
dans lequel la roue interne (80) comporte une première roue interne (80a) et une deuxième roue interne (80b) pour transmettre la rotation de l'arbre à cames (30) respectivement à la première partie de came (70a) et à la deuxième partie de came (70b).

18. Appareil de commande de durée d'ouverture de soupapes selon la revendication 17, dans lequel la première roue interne (80a) et la deuxième roue interne (80b) sont reliées de manière rotative l'une à l'autre.

19. Appareil de commande de durée d'ouverture de soupapes selon la revendication 17, comportant en outre un premier et un deuxième palier (140, 141a) montés à l'intérieur du logement de roue (90) et supportant respectivement la première roue interne (80a) et la deuxième roue interne (80b) .

20. Moteur (1) monté avec le dispositif de commande de durée d'ouverture de soupapes selon la revendication 1.
